# EUROPÄISCHE PATENTSCHRIFT

(11) **EP 2 757 513 B1**
(45) Veröffentlichungstag und Bekanntmachung des Hinweises auf die Patenterteilung: **27.07.2016**
(21) Anmeldenummer: 13152084.3
(22) Anmeldetag: 21.01.2013
(51) Int. Cl.: G06Q 20/02, G06Q 20/10, G06Q 20/22, G06Q 20/40, G06Q 30/00, G06Q 20/04

(54) **Verfahren zum Abrechnen von Ortsnutzungen**
Method for invoicing the use of locations
Procédé de calcul d'utilisations d'espaces

(43) Veröffentlichungstag der Anmeldung: 23.07.2014
(73) Patentinhaber: Kapsch TrafficCom AG, 1120 Wien (AT)
(72) Erfinder: Namdar, Nader, 1120 Wien (AT)
(74) Vertreter: Weiser, Andreas

(56) Entgegenhaltungen:
- EP-A1- 1 182 625
- EP-A1- 2 511 868
- WO-A1-03/075192
- WO-A2-98/40809
- US-A1- 2005 086 164
- US-A1- 2007 164 102
- US-A1- 2008 147 564
- US-A1- 2008 189 186
- US-A1- 2009 182 675
- US-B2- 7 210 620

## Beschreibung

Die vorliegende Erfindung betrifft ein Verfahren zum Abrechnen von Ortsnutzungen von Fahrzeuggeräten in einem Straßenmautsystem mittels eines davon gesonderten Zahlungstransaktionssystems, wobei das Straßenmautsystem einen Mautserver, zumindest ein Mautterminal und zumindest ein Subsystem zum Ermitteln der Ortsnutzungen hat und das Zahlungstransaktionssystem einen Transaktionsserver und zumindest ein Transaktionsterminal für Zahlungskarten hat.

Das Ermitteln von Ortsnutzungen von Fahrzeugen erfolgt in elektronischen Straßenmautsystemen mit Hilfe von in den Fahrzeugen mitgeführten Fahrzeuggeräten (Onboard-Units, OBUs), welche zu diesem Zweck entweder über Kurzreichweitenfunk (dedicated short range communication, DSRC) mit geographisch verteilten Funkbaken (DSRC-Baken) kommunizieren, oder mit Hilfe von sich in einem globalen Satellitennavigationssystem (global navigation satellite system, GNSS) selbst verortenden GNSS-OBUs. Während in DSRC-Systemen die Baken direkt mit der Mautzentrale in Verbindung stehen, senden GNSS-OBUs die ermittelten Daten in der Regel über Mobilfunk an den zentralen Mautserver.

Das Abrechnen erfolgt in derartigen Straßenmautsystemen, wie beispielsweise gemäß der US 2005/010478 A1, meist anhand der Vorauszahlung eines Geldbetrags, welcher zusätzlich eine Sicherheitsleistung für das Fahrzeuggerät umfassen kann. Bei Rückgabe eines Fahrzeuggeräts, z.B. am Mautterminal einer dezentralen Verteilerstelle vor einem Grenzübertritt, rechnet der Mautserver die bis dahin gezahlten und die genutzten Geldbeträge ab. Damit verbunden sind Wartezeiten und unerwünschte Bargeldreserven oder aufwändige (internationale) Banküberweisungen an der jeweiligen Verteilerstelle.

Um den hohen Aufwand und die geringe Flexibilität eines solchen Verfahrens zum Abrechnen zu verbessern, wurde in der EP 2 511 868 ein Verfahren offenbart, in welchem Zahlungskarten, beispielsweise Kreditkarten, zum Festlegen, Zahlen, Nachzahlen und Abrechnen von Transaktionswerten eingesetzt werden. Darin kooperieren Straßenmautsystem und Zahlungstransaktionssystem ohne gegenseitige Integration, sodass ein Einbinden des Straßenmautsystems in die komplex gesicherten Abläufe der Abwicklung von Zahlungskartentransaktionen und eine damit verbundenen Zertifizierung des Straßenmautsystems zur Einhaltung festgelegter Standards, z.B. des Payment Card Industry Data Security Standards (PCI-DSS), vermieden werden.

In dem bekannten Verfahren werden eine direkte Datenverbindung zwischen dem Mautterminal und dem Transaktionsterminal an einer Verteilerstelle (Point Of Sales, POS) und eine weitere direkte Datenverbindung zwischen Mautserver und Transaktionsserver geschaffen, um die beiden Systeme kooperieren zu lassen. Demnach wird am POS eine Zahlungstransaktion festgelegt und bei erfolgreicher Zahlungsabwicklung eine Bestätigungsmeldung vom Transaktionsterminal an das Mautterminal weitergeleitet, die von diesem zusammen mit einer dort erfassten Kennung des Fahrzeuggeräts an den Mautserver gesendet wird. Der Mautserver empfängt überdies über die weitere direkte Datenverbindung zusammen mit der gleichen Bestätigungsmeldung vom Transaktionsserver eine dort generierte Ersatzkennung. Mithilfe der vom Mautterminal und vom Transaktionsserver gleichermaßen empfangenen Bestätigungsmeldung kann der Mautserver Ersatzkennung und Fahrzeuggerätkennung einander zuordnen. Das Abrechnen von im Straßenmautsystem anhand der Fahrzeuggerätkennung ermittelten Ortsnutzungen erfolgt später über die direkte Datenverbindung zwischen Mautserver und Transaktionsserver unter der Ersatzkennung.

Aus der US 2008/0189186 A1 ist ein Kreditkartenzahlungssystem bekannt, bei welchem ein Kunde die Telefonnummer seines Mobiltelefons in ein Händlerterminal eingibt, welches diese an einen Zahlungsserver sendet. Der Zahlungsserver sendet einen Internetlink an das Mobiltelefon zurück, über welchen Kreditkartendaten zur Zahlung am Zahlungsserver eingegeben werden können. Der Zahlungsserver sendet nach Autorisierung der Zahlung eine Bestätigungsmeldung an das Händlerterminal und das Mobiltelefon zurück.

Die vorliegende Erfindung setzt sich zum Ziel, das genannte, auf der Verwendung von Zahlungskarten aufbauende Verfahren zum Abrechnen von Ortsnutzungen von Fahrzeuggeräten in einem Straßenmautsystem weiter zu verbessern.

Dieses Ziel wird erfindungsgemäß mit einem Verfahren der einleitend genannten Art erreicht, welches umfasst:
Eingeben einer Kennung eines Fahrzeuggeräts in das Mautterminal, Generieren einer zugehörigen Transaktionskennung und Senden der Transaktionskennung vom Mautterminal an den Transaktionsserver über eine zwischen diesen verlaufende erste Datenverbindung;
Senden der Transaktionskennung vom Transaktionsserver an das Transaktionsterminal über eine zwischen diesen verlaufende zweite Datenverbindung;
Eingeben einer Kartenkennung einer Zahlungskarte in das Transaktionsterminal und Senden der Kartenkennung und der Transaktionskennung vom Transaktionsterminal an den Transaktionsserver über die zweite Datenverbindung;
Senden einer im Transaktionsserver generierten, der Kartenkennung eindeutig zugeordneten Ersatzkennung und der Transaktionskennung vom Transaktionsserver über die erste Datenverbindung an das Mautterminal;
Aufsuchen der der Transaktionskennung zugehörigen Fahrzeuggerätkennung im Mautterminal und Senden der Fahrzeuggerätkennung und der Ersatzkennung vom Mautterminal an den Mautserver; und
Verwenden der Ersatzkennung in einer Kommunikation über eine zwischen Mautserver und Transaktionsserver verlaufende dritte Datenverbindung für das Abrechnen einer vom Subsystem unter der zugehörigen Fahrzeuggerätkennung ermittelten Ortsnutzung.

Das erfindungsgemäße Verfahren erübrigt eine direkte Datenverbindung zwischen Mautterminal und Transaktionsterminal am POS, welche die Gefahr einer Verletzung der Datenintegrität des Zahlungstransaktionssystems in sich birgt: Über eine solche, ausschließlich am POS verlaufende und deshalb exponierte Datenverbindung und das meist mit nur geringer Intelligenz, d.h. geringer Rechenleistung und (Software-) Funktionalität, ausgestattete Transaktionsterminal könnte sonst eine Kontamination der Daten des Zahlungstransaktionssystems erfolgen. Die Vermeidung einer direkten Datenverbindung zwischen Mautterminal und Transaktionsterminal erhöht die Transaktionssicherheit und Datenintegrität sogar bei möglichen Unterbrechungen der Datenverbindungen zwischen Straßenmautsystem und Zahlungstransaktionssystem: Würde nämlich die Zahlungstransaktion zwischen Transaktionsserver und Transaktionsterminal korrekt und vollständig abgewickelt und bestätigt, die Datenverbindung zum Mautterminal jedoch unterbrochen werden, so musste bisher entweder jedes einzelne Transaktionsterminal im Zahlungstransaktionssystem fähig sein, diese Unterbrechung zu erkennen und die Bestätigung zu einem späteren Zeitpunkt - wenn die Datenverbindung zum Mautterminal wieder unterbrechungsfrei funktioniert - noch einmal an das Mautterminal zu senden, oder die gesamte Zahlungstransaktion musste ausgehend von Transaktionsterminal rückabgewickelt und zu einem späteren Zeitpunkt wiederholt werden.

Gemäß dem verbesserten Verfahren kann nun der in der Regel mit hoher Rechenleistung ausgestattete Transaktionsserver eine solche Unterbrechung zum Mautterminal erkennen und entweder ein erneutes Senden der Ersatzkennung zu einem späteren Zeitpunkt veranlassen oder direkt und zentral die Zahlungstransaktion rückabwickeln bzw. stoppen. Keines der vielen Transaktionsterminals bedarf somit gemäß diesem Verfahren einer Anpassung; Adaptierungen sind bestenfalls zentral im Transaktionsserver erforderlich. Alle Transaktionsterminals stehen ausschließlich mit dem Transaktionsserver in Verbindung, was die Manipulationssicherheit des Zahlungstransaktionssystems und des gesamten Verfahrens zum Abrechnen von Ortsnutzungen erhöht. Damit ist das gesamte Verfahren rascher implementierbar und weist eine höhere Sicherheit gegenüber Manipulationen auf als im Stand der Technik bekannte Verfahren. Eine Kontamination des sensiblen Zahlungstransaktionssystems und seiner Daten ist deutlich erschwert oder sogar unmöglich; dabei kann weiterhin eine Zertifizierung des Straßenmautsystems nach Zahlungskartensystem-Standards unterbleiben, da weiterhin keine tiefergehende Integration der beiden Systeme stattfindet.

Um das Verfahren noch effizienter zu gestalten, ist es vorteilhaft, wenn beim Abrechnen der Ortsnutzung bevorzugt
- im Straßenmautsystem zu der Fahrzeuggerätkennung zumindest ein Mautwert berechnet wird;
- im Mautserver auf eine Abrechnungsaufforderung hin die der Fahrzeuggerätkennung zugeordnete Ersatzkennung ermittelt und zusammen mit dem Mautwert über die dritte Datenverbindung an den Transaktionsserver gesendet wird; und
- im Transaktionsserver die der empfangenen Ersatzkennung zugeordnete Kartenkennung ermittelt und der Mautwert anhand der ermittelten Kartenkennung abgerechnet wird.

Bevorzugt wird in das Mautterminal zusätzlich ein Transaktionswert eingegeben, welcher beim Senden der Transaktionskennung vom Mautterminal an den Transaktionsserver und von dort weiter an das Transaktionsterminal mitgesendet wird. Es ist dabei nicht notwendig, einen solchen Transaktionswert aufwändig in das Transaktionsterminal einzutippen, sondern es besteht die Möglichkeit der - heute meist automatischen - Erfassung des Transaktionswerts am Mautterminal. Dadurch wird das Verfahren weiter beschleunigt und die Bearbeitungszeit am POS reduziert.

Um die Sicherheit und Nachvollziehbarkeit des Verfahrens weiter zu erhöhen, wird bevorzugt die Transaktionskennung beim Senden der Fahrzeuggerätkennung und der Ersatzkennung vom Mautterminal an den Mautserver mitgesendet. Dadurch kann der gesamte, im Mautsystem erfasste Teil der Transaktion lückenlos und vollständig nachvollzogen werden. Dies schafft im Straßenmautsystem die Möglichkeit zur sofortigen Kontrolle oder, wenn die Daten im Mautserver gespeichert werden, für einen späteren Nachweis der Transaktion.

Besonders günstig ist es, wenn im Transaktionsserver Autorisierungsdaten generiert werden, welche beim Senden der Ersatzkennung und der Transaktionskennung vom Transaktionsserver an das Mautterminal und bevorzugt auch beim Senden der Fahrzeuggerätkennung und der Ersatzkennung vom Mautterminal an den Mautserver mitgesendet werden. Diese Autorisierungsdaten können einerseits ein Freigabecode für die Zahlungstransaktion sein, sie können jedoch darüberhinaus auch einen Zeitstempel der Autorisierung, eine eindeutige Kennung des Transaktionsterminals usw. umfassen. Die Autorisierungsdaten enthalten in diesem Fall detaillierte Informationen über die Zahlungstransaktion und erlauben so auch den Nachweis möglicher - eventuell später entdeckter - Fehler gegenüber dem Zahlungstransaktionssystem.

In einer bevorzugten Ausführungsform werden im Mautterminal zusätzlich personen- und/oder fahrzeugbezogene Daten erfasst, welche beim Senden der Fahrzeuggerätkennung und der Ersatzkennung vom Mautterminal an den Mautserver mitgesendet werden. Diese Daten ermöglichen es dem Straßenmautsystem, sowohl das Abrechnen zusätzlich zu individualisieren, indem die Abrechnung auf Personen und/oder Fahrzeuge bezogen erstellt werden, als auch korrekte Ortsnutzungen sicherzustellen, indem die Ortsnutzungen von Fahrzeugen anhand der Fahrzeugkennzeichen oder anderer erfasster Personen - und/oder fahrzeugbezogener Daten - zumindest stichprobenartig - überprüft werden.

Besonders vorteilhaft ist es, wenn als Zahlungstransaktionssystem ein Kredikarten-Zahlungstransaktionssystem verwendet wird. Damit kann das Straßenmautsystem im beschriebenen Verfahren auf die besonders hohe Flexibilität und Sicherheit von Kreditkarten-Zahlungstransaktionen zurückgreifen, ohne dabei die Zahlungstransaktionen selbst ausführen zu müssen, und die Verbreitung und internationale Anwendbarkeit von Kreditkarten vorteilhaft nutzen.

Weitere Merkmale und Vorteile der Erfindung ergeben sich aus der nachfolgenden Beschreibung eines bevorzugten Ausführungsbeispiels unter Bezugnahme auf die begleitenden Zeichnungen, in denen zeigt:
Fig. 1 schematisch den physischen Aufbau eines Straßenmautsystems und eines Zahlungstransaktionssystems und deren Zusammenwirken im erfindungsgemäßen Verfahren; und
Fig. 2 ein Sequenzdiagramm einer Ausführungsform des erfindungsgemäßen Verfahrens.

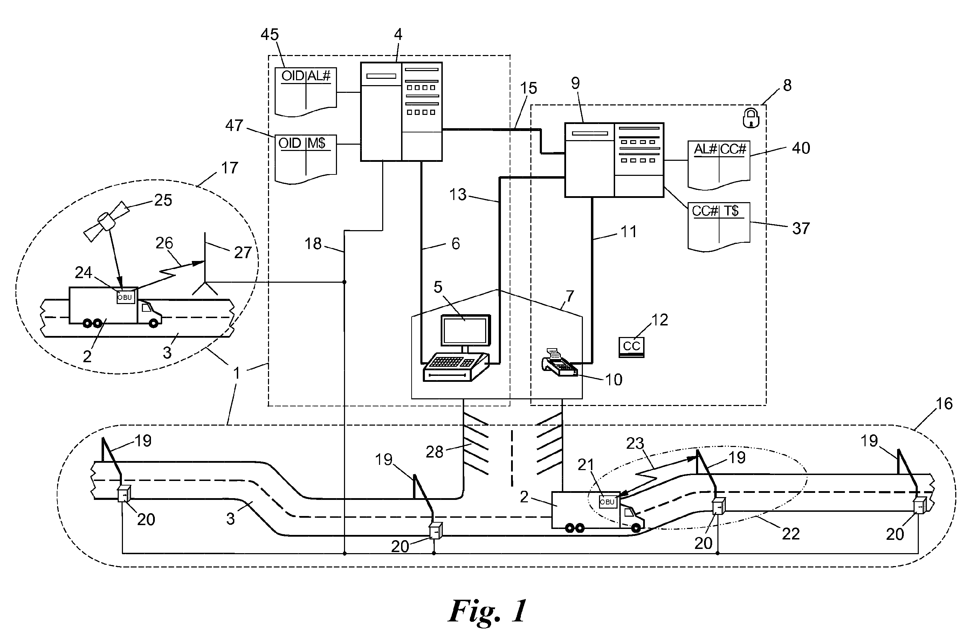

Fig. 1 zeigt ein Straßenmautsystem 1 zum Ermitteln und Vermauten von Ortsnutzungen von Fahrzeugen 2, welche sich auf Straßen 3 bewegen. Das Straßenmautsystem 1 umfasst einen zentralen Mautserver 4, welcher mit einer Vielzahl von dezentralen Mautterminals 5, von denen in Fig. 1 symbolisch eines dargestellt ist, über Datenverbindungen 6 verbunden ist. Die Mautterminals 5 sind an Verteilerstellen 7 angeordnet.

Ein Zahlungstransaktionssystem 8 zum Abrechnen der Ortsnutzungen der Fahrzeuge 2 umfasst einen zentralen Transaktionsserver 9, welcher mit einer Vielzahl von dezentralen Transaktionsterminals 10, von denen in Fig. 1 wieder symbolisch eines dargestellt ist, über direkte Datenverbindungen 11 (im Weiteren auch "zweite Datenverbindungen" genannt) verbunden ist. Die Transaktionsterminals 10 sind ebenso wie die Mautterminals 5 an bzw. in den Verteilerstellen 7 (Point Of Sales, POS) angeordnet und jeweils einem oder mehreren Mautterminals 5 zugeordnet, ohne jedoch untereinander in direkter Verbindung zu stehen.

Bei dem Zahlungstransaktionssystem 8 handelt es sich um ein gesichertes Transaktionssystem auf Basis von Zahlungskarten 12, wie Kreditkarten, Debitkarten oder Guthabenkarten, bei denen die Zahlungstransaktion in einem Online-Verfahren mittels Kommunikation zwischen dem Transaktionsserver 9 und dem jeweiligen Transaktionsterminal 10, das zu diesem Zweck über eine eindeutige Transaktionsterminalkennung PID verfügt, stattfindet. Eine Zahlungskarte 12 verfügt ihrerseits über eine eindeutige Kennung CC# und gegebenenfalls einen Benutzercode PIN.

Das Zahlungstransaktionssystem 8 ist nach strengsten Datensicherheitsvorschriften und -Standards ausgebildet und zertifiziert, wie dem Payment Card Industry Data Security Standard (PCI-DSS), dem Visa^{®}-Account-Information-Security-Programm (AIS und dessen Schwesterprogramm CISP), dem MasterCard^{®}-Site-Data-Protection-Programm (SDP), der American Express^{®} Security Operating Policy (DSOP), der Discover Information Security and Compliance (DISC) oder den JCB^{®}-Sicherheitsregeln sowie vergleichbaren Zahlungstransaktionsverfahren etwa auch unter Nutzung des Maestro^{®} SecureCode oder des MasterCard^{®} SecureCode™.

Jedes Mautterminal 5 ist mit dem Transaktionsserver 9 jeweils über eine direkte Datenverbindung 13 (im Weiteren auch "erste Datenverbindung" genannt) verbunden. Dabei dient ein Mautterminal 5 vor allem als Eingabestelle für Daten, welche für den Mautserver 4 bestimmt sind, und leitet Daten, die es vom Transaktionsserver 9 erhält, an den Mautserver 4 weiter. Wie in Fig. 1 dargestellt, kann das Mautterminal 5 beispielsweise als Kassensystem in einer Mautstelle oder Verschleißstelle, z.B. an Landesgrenzen oder Tankstellen, ausgeführt sein. Das Transaktionsterminal 10 dient als lokale Benutzerschnittstelle für die Zahlungstransaktion und kann mit einem Kartenleser für die Zahlungskarte 12 und einer einfachen Tastatur zur Dateneingabe ausgestattet sein. Verteilerstellen 7 mit beiden Terminals 5 und 10 können auch in Form von integrierten Automaten 14 zur Selbstbedienung ausgeführt sein (in Fig. 1 nicht dargestellt).

Zwischen dem Transaktionsserver 9 und dem Mautserver 4 besteht eine Datenverbindung 15 (im Weiteren auch "dritte Datenverbindung" genannt) zum direkten Datenaustausch zwischen diesen, wie weiter unten ausführlicher beschrieben. Sowohl Transaktionsserver 9 als auch Mautserver 4 sind dabei jeweils nicht als notwendigerweise einzelne, abgeschlossene Recheneinheiten aufzufassen, sondern können Teile von derartigen Recheneinheiten oder Teile gegebenenfalls geographisch verteilter Serverfarmen oder auch Teile anderer Rechnersysteme, z.B. in einem Kreditinstitut oder bei einem Straßenbetreiber, sein.

Die Datenverbindungen 6, 11, 13 und 15 können in Form von drahtgebundenen Leitungen gegebenenfalls mit proprietären Datenübertragungsprotokollen, Internetverbindungen (z.B. in Form eines virtuellen privaten Netzwerks VPN) oder als Drahtlosverbindungen, z.B. Mobilfunk, aber auch satellitengestützt, ausgeführt sein, wobei sie permanent bestehen oder im Bedarfsfall aufgebaut werden können (z.B. mittels Einwahlmodems, als paketvermittelte Datensitzungen usw.). Auch ist jede Kombination von Verbindungsarten möglich, sodass z.B. entlegene, selten genutzte Maut- oder Transaktionsterminals 5, 10 Einwahlverbindungen aufbauen, während Maut- bzw. Transaktionsterminals 5, 10 an stark frequentierten Orten permanent mit den Maut- und Transaktionsservern 4, 9 in Verbindung stehen können.

Der Mautserver 4 steht mit Subsystemen 16, 17 zum Ermitteln der Ortsnutzungen von Fahrzeugen 2 in Verbindung, welche Subsysteme 16, 17 ebenfalls Teile des Straßenmautsystems 1 sind. Die dazu genutzten Datenverbindungen 18 können in verschiedener Weise, wie in Zusammenhang mit den Datenverbindungen 6, 11, 13, 15 beschrieben, ausgeführt sein.

Ein erstes beispielhaftes Subsystem ist das Subsystem 16, welches über geographisch verteilte Kurzreichweiten-Kommunikationsbaken (dedicated short range communication beacons, DSRC-Baken) 19 mit lokalen Recheneinheiten 20 verfügt. Tritt ein von einem Fahrzeug 2 mitgeführtes Fahrzeuggerät (Onboard-Unit, OBU) 21 in den Funkbereich 22 einer DSRC-Bake 19 ein, so stellen diese DSRC-Bake 19 und die OBU 21 eine Kommunikationsverbindung 23 her. An dieser Kommunikationsverbindung 23 wird die Nutzung des im Funkbereich 22 der DSRC-Bake 19 liegenden Abschnitts bzw. Orts der Straße 3 durch das Fahrzeug 2 erkannt. Als Kommunikationsverbindung 23 eignen sich alle bekannten Kurzreichweiten-Verbindungen wie Infrarot-Verbindungen, RFID, WAVE (Wireless Access in Vehicular Environments), ITS-G5, WLAN (Wireless Local Area Network), Wi-Fi^{®}, Bluetooth^{®} etc.

Die Ortsnutzungen werden dabei im Straßenmautsystem 1 anhand einer jeder OBU 21 zugeordneten, eindeutigen Fahrzeuggerät- bzw. OBU-Kennung OID ermittelt, welche im Rahmen der Kommunikationsverbindung 23 an die DSRC-Bake 19 gesandt wird. Die DSRC-Baken 19 senden die in den Kommunikationsverbindungen 23 ermittelten Daten beispielsweise gemeinsam mit eindeutigen Bakenkennungen BID der DSRC-Baken 19 über die Datenverbindungen 18 an den Mautserver 4.

Ein zweites beispielhaftes Subsystem ist das Subsystem 17, welches die Ortsnutzungen der Fahrzeuge 2 mit Hilfe von OBUs 24 ermittelt, die sich in einem globalen Satellitennavigationssystem 25 selbst verorten. Die OBUs 24 kommunizieren über eine Funkstrecke 26 mit einem Funknetz 27, das die ermittelten Ortsnutzungen über die Datenverbindung 18 an den zentralen Mautserver 4 sendet. Bei der Funkstrecke 26 und dem Funknetz 27 handelt es sich bevorzugt um ein zellulares Mobilfunknetz. Alternativ kann diese Verbindung jedoch auch über eine der Kurzreichweiten-Kommunikationsverbindungen 23 und DSRC-Baken 19 oder andere geeignete, mit dem Mautserver 4 in Verbindung stehende Funknetzwerke aufgebaut werden.

Ortsnutzungen von Fahrzeugen 2, welche im Straßenmautsystem 1 ermittelt und vermautet werden, können beliebiger Art sein, sei es das Befahren einer Mautstraße wie der Straße 3 oder eines Abschnitts derselben, das Einfahren in ein spezifisches Gebiet (innerstädtische Bereiche, Nationalparks, Tunnels etc.), oder das Verweilen in einem Gebiet wie dem Parkplatz 28 etc. Die für die Ortsnutzung abzurechnende Maut kann auf gefahrene Strecke (Wegemaut) und/oder auf Benutzungsdauer (Zeitmaut) bezogen sein.

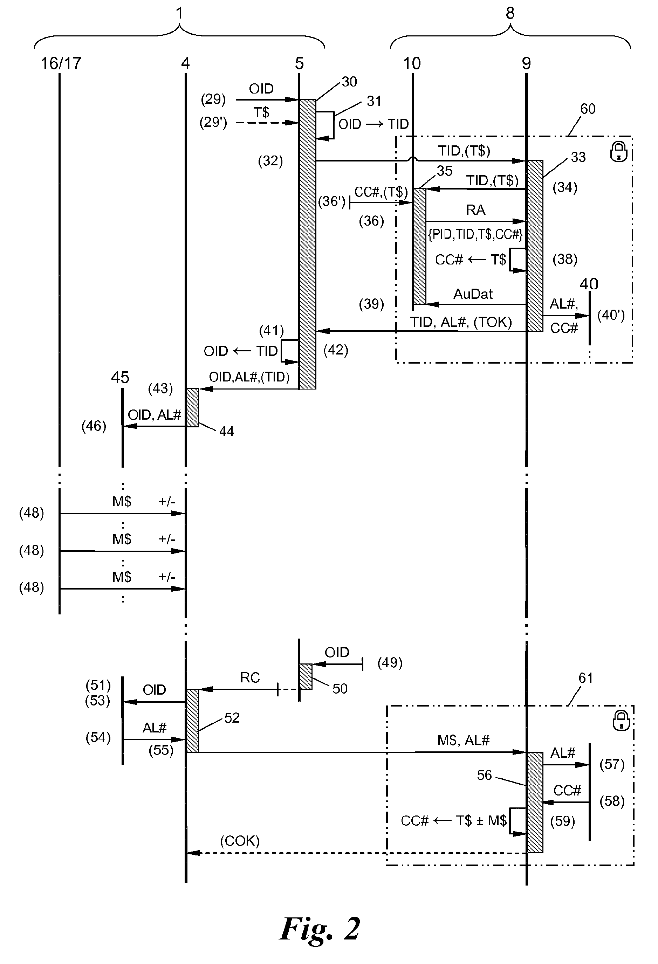

Fig. 2 zeigt das Verfahren zum Abrechnen der Ortsnutzungen der Fahrzeuge 2 bzw. OBUs 21, 24 im Detail. Das Verfahren startet mit der Eingabe einer Fahrzeuggerätkennung OID in Schritt 29 und eines Transaktionswerts T$ in Schritt 29' in eines der Mautterminals 5, was darin einen Prozess 30 auslöst. Der Transaktionswert T$ dient beispielsweise als Vorauszahlung für eine später abzurechnende Maut und kann z.B. auch eine Sicherheitsleistung (Deposit) für die OBU 21, 24 umfassen. Alternativ könnte der Transaktionswert T$ auch nur ein symbolischer Betrag sein, z.B. 1 Eurocent, um überhaupt eine Transaktion auszulösen. Der Transaktionswert T$ kann dabei in Schritt 29' frei festgelegt und manuell eingegeben, als fixer Wert vorgegeben oder aus einer vorgefertigten Liste im Mautterminal 5 ausgewählt werden.

Die Reihenfolge der Schritte 29 und 29' ist beliebig. Der Prozess 30 dient der Erfassung und Sammlung der für das Verfahren aus Sicht des Straßenmautsystems 1 notwendigen Informationen der Transaktion und deren Weiterleitung an den Mautserver 4.

In Schritt 31 wird im Mautterminal zur Fahrzeuggerätkennung OID eine eindeutige Transaktionskennung TID generiert. Die Transaktionskennung TID kann eine fortlaufende Zahl, gegebenenfalls unter Ergänzung von Datum, Uhrzeit und/oder einer Kennung MID des Mautterminals 5 sein. Die Transaktionskennung TID kann zu Plausibilisierungszwecken auch Teile der Fahrzeuggerätkennung OID enthalten; jedoch ist aus der bloßen Kenntnis der Transaktionskennung TID die Fahrzeuggerätkennung OID bevorzugt nicht ableitbar.

In Schritt 32 wird die Transaktionskennung TID mit dem Transaktionswert T$ über die erste Verbindung 13 an den Transaktionsserver 9 gesendet, um darin einen Zahlungstransaktionsprozess 33 anzustoßen. In diesem Prozess 33 wird zunächst die Transaktionskennung TID zusammen mit dem Transaktionswert T$ vom Transaktionsserver 9 über die zweite Datenverbindung 11 an das Transaktionsterminal 10 gesendet (Schritt 34). Dadurch wird dort ein Autorisierungsprozess 35 gestartet, in welchem das Transaktionsterminal 10 bereit ist, die Kartenkennung CC# einer Zahlungskarte 12 zu erfassen, z.B. durch Einlesen der Zahlungskarte 12 an einem Kartenleser des Transaktionsterminals 10 (Schritt 36'). Alternativ oder ergänzend zu Schritt 29' könnte in Schritt 36' auch die Eingabe des Transaktionswerts T$ direkt am Transaktionsterminal 10 erfolgen, in welchem Fall sich das Eingeben und Mitsenden des Transaktionswerts T$ in den Schritten 29', 32 und 34 erübrigen kann. Optional, in Abhängigkeit vom eingesetzten Zahlungstransaktionssystem 8, kann auch die Eingabe eines Benutzercodes PIN und zusätzlicher, z.B. nutzerbezogener Informationen am Transaktionsterminal 10 vorgesehen sein.

Die Reihenfolge der Eingabe von Kartenkennung CC# und gegebenenfalls Transaktionswert T$, Benutzercode PIN und weiterer Daten am Transaktionsterminal 10 ist beliebig und wird in der Regel vom Zahlungstransaktionssystem 8 vorgegeben.

Sind alle für eine Zahlungstransaktion notwendigen Daten im Transaktionsterminal 10 erfasst, sendet dieses, gegebenenfalls nach Quittieren, eine Autorisierungsanforderung RA an den Transaktionsserver 9 (Schritt 36). Die Autorisierungsanforderung RA enthält die Kennung des Transaktionsterminals PID, die Transaktionskennung TID, den Transaktionswert T$, die Kartenkennung CC# und optional den Benutzercode PIN und weitere Benutzerdaten.

Mit dem Empfang der Autorisierungsanforderung RA {PID, TID, T$, CC#} startet im Zahlungstransaktionsprozess 33 das Autorisieren der Zahlungstransaktion und Generieren einer Ersatzkennung AL# für die Kartenkennung CC#. Der Transaktionsserver 9 prüft dazu anhand der in Schritt 36 mit der Autorisierungsanforderung RA empfangenen Daten die Zahlungstransaktion auf ihre Validität. Der genaue Ablauf der Validierung ist dem Stand der Technik für das jeweils eingesetzte Zahlungstransaktionssystem 8 zu entnehmen; der Transaktionsserver 9 kann dabei z.B. ein von ihm geführtes, der jeweiligen Zahlungskarte 12 zugeordnetes Kartenkonto 37 (Fig. 1) abfragen, wie Schritt 38 versinnbildlicht, oder alternativ die Zahlungstransaktion von einer externen Stelle, z.B. einem Kreditkartenbetreiber, validieren und autorisieren lassen. Der Schritt 38 kann auch zu einem späteren Zeitpunkt im Prozess 33 oder sogar nach dessen Abschluss durchgeführt werden.

Nach positiver Prüfung bzw. Validierung sendet der Transaktionsserver 9 als Autorisierung für die Zahlungstransaktion Autorisierungsdaten AuDat an das Transaktionsterminal 10 zurück (Schritt 39), welches damit in bekannter Weise, z.B. unter Ausgabe einer Kundenquittung, seinen Autorisierungsprozess 35 beendet. Die Authorisierungsdaten AuDat sind für jede Zahlungstransaktion eindeutig. Sie können dazu beispielsweise einen Zeitstempel der Transaktion, die Kennung PID des verwendeten Transaktionsterminals 10 und/oder ein digitales Zertifikat des Transaktionsservers 9 enthalten, wie in der Technik bekannt.

Die im Prozess 33 generierte Ersatzkennung AL# der Kartenkennung CC# ist dieser eindeutig zugeordnet und wird in Schritt 40' in einer Datenbank 40 des Transaktionsservers 9 zur späteren Verwendung gespeichert. Aus der bloßen Kenntnis der Ersatzkennung AL# ist die Kartenkennung CC# nicht ableitbar, sie kann jedoch Teile der Kartenkennung CC# enthalten, z.B. deren letzte vier Ziffern zu Plausibilisierungszwecken.

In Schritt 41, der auch vor Schritt 40' durchlaufen werden könnte, sendet der Transaktionsserver 9 die Ersatzkennung AL# und eine optionale Bestätigungsmeldung TOK ("transaction ok") unter der Transaktionskennung TID an das Mautterminal 5, was im Beispiel von Fig. 2 den Prozess 33 abschließt. Wenn gewünscht, kann der Transaktionsserver 9 dabei die Autorisierungsdaten AuDat an das Mautterminal 5 mitsenden. Das Mautterminal 5 sucht darauf anhand der empfangenen Transaktionskennung TID die zugehörige Fahrzeuggerätkennung OID auf (Schritt 42).

Zum Ende des Prozesses 30 werden in Schritt 43 die Fahrzeuggerätkennung OID und die Ersatzkennung AL# vom Mautterminal 5 über die Datenverbindung 6 an den Mautserver 4 gesendet, was den Prozess 30 im Mautterminal 5 abschließt. Zur sofortigen Kontrolle oder für einen späteren Nachweis der Zahlungstransaktion können in Schritt 43 zusätzlich die Transaktionskennung TID und/oder gegebenenfalls die Autorisierungsdaten AuDat, sowie mögliche darüberhinausgehende Informationen, z.B. der Transaktionswert T$ sowie weitere während des Prozesses 30 am Mautterminal 5 erfasste personen- und/oder fahrzeugbezogene Daten, mitübertragen werden.

Der Mautserver 4 speichert anschließend in einem Prozess 44 die einander zugeordneten Kennungen OID, AL# in einer Datenbank 45 des Mautservers 4 zur weiteren Verwendung bei der Abrechnung (Schritt 46). Für den späteren Nachweis könnte der Mautserver 4 im Schritt 46 auch die in Schritt 43 optional empfangenen zusätzlichen Informationen - die Transaktionskennung TID, gegebenenfalls die Autorisierungsdaten AuDat, sowie z.B. den Transaktionswert T$ und/oder personen- und/oder fahrzeugbezogene Daten - speichern.

Der Mautserver 4 verwendet anschließend die Ersatzkennung AL# und/oder die Fahrzeuggerätkennung OID zur Führung bzw. Identifikation eines personen- und/oder fahrzeugbezogenen Mautkontos 47 zur Abrechnung von Mauttransaktionen im Straßenmautsystem 1. Fig. 2 zeigt einige beispielhafte Mauttransaktionen 48, welche von den Subsystemen 16, 17 ausgelöst werden, um Ortsnutzungen von Fahrzeugen 2 zu ermitteln und daraus mautrelevante Daten, sog. "Mautwerte" M$, für den Mautserver 4 zu erzeugen. Bei den Mautwerten M$ kann es sich - je nach Architektur des Straßenmautsystems 1 - einerseits um die Angabe einzelner Ortsnutzungen z.B. in Form einer Fahrzeuggerätkennung OID gemeinsam mit einer Bakenkennung BID handeln, andererseits können sie fertige einzelne oder kumulierte Mautberechnungsergebnisse oder eine Mischung dieser Varianten sein, und dabei sowohl von den DSRC-Baken 19 als auch den sich selbst verortenden OBUs 24 über das Funknetz 27 jeweils unter einer Fahrzeuggerätkennung OID an den Mautserver 4 gesendet werden. Der Mautserver 4 belastet (oder begünstigt) jeweils das der Fahrzeuggerätkennung OID zugeordnete Mautkonto 47 mit dem bzw. den Mautwerten M$.

Zur anschließenden Abrechnung der Ortsnutzungen eines Fahrzeugs 2 über das Zahlungstransaktionssystem 8 gibt ein Benutzer in Schritt 49 z.B. die im Fahrzeug 2 mitgeführte OBU 21 bzw. 24 in einer beliebigen Verteilerstelle 7 zurück, wodurch (oder wobei) die Fahrzeuggerätkennung OID erneut dem Mautterminal 5 bekanntgegeben wird (Prozess 50). Das Mautterminal 5 sendet daraufhin in Schritt 51 eine Abrechnungsaufforderung RC an den Mautserver 4. Eine Abrechnungsaufforderung RC kann natürlich auch ohne Rückgabe einer OBU 21, 24 erfolgen, z.B. bei Tausch zweier OBUs 21, 24 oder einfach durch Eingabe der Fahrzeuggerätkennung OID in das Mautterminal 5. Sie könnte außerdem auch direkt im Mautserver 4 bei Eintreten bestimmter Ereignisse, z.B. zu Monatsende für eine Monatsabrechnung, generiert werden, in welchem Fall die Schritte 49 bis 51 entfallen.

In einem durch die Abrechungsaufforderung RC ausgelösten folgenden Prozess 52 ermittelt der Mautserver 4 nun aus der Datenbank 45 die der Fahrzeuggerätkennung OID zugeordnete Ersatzkennung AL#, siehe Schritte 53 und 54. In Schritt 55 sendet der Mautserver 4 anschließend den oder die Mautwert(e) M$ der Mauttransaktionen 48 - oder einen daraus im Mautkonto 47 akkumulierten Mautwert M$ - unter der Ersatzkennung AL# über die dritte Datenverbindung 15 an den Transaktionsserver 9 und beendet den Prozess 52 und schließt dabei gegebenenfalls auch das zugehörige Mautkonto 47. Die Mitsendung weiterer Daten in Schritt 55, z.B. der Autorisierungsdaten AuDat zur zusätzlichen Sicherstellung der Authentizität, ist dabei ebenfalls möglich.

Der Transaktionsserver 9 übernimmt anschließend die Abrechnung auf Basis der Zahlungskarte 12 bzw. deren Kartenkennung CC#. Dabei kann sowohl eine Gutschrift als auch eine Lastschrift mit der Zahlungskarte 12 abgerechnet werden. Nach dem Empfang des bzw. der Mautwert(e) M$ und der Ersatzkennung AL# vom Mautserver 4 in Schritt 55 ermittelt der Transaktionsserver 9 in einem Prozess 56 zunächst aus der Datenbank 40 die zur Ersatzkennung AL# gehörige Kartenkennung CC#, siehe Schritte 57 und 58. Der bzw. die Mautwert(e) M$ werden daraufhin in Schritt 59 dem Kartenkonto 37 mit der Kartenkennung CC# angelastet oder gutgeschrieben bzw. gegenüber der externen Stelle abgerechnet, was den Abrechnungsvorgang der Ortsnutzungen abschließt. Optional kann eine Bestätigungsmeldung COK ("charge ok") des in Schritt 55 vom Transaktionsserver 9 übernommenen Abrechnungsvorganges von diesem über die dritte Datenverbindung 15 an den Mautserver 4 erfolgen.

Wie durch die Blöcke 60 und 61 in Fig. 2 versinnbildlicht, handelt es sich bei dem Zahlungstransaktionssystem 8 um ein gesichertes Zahlungstransaktionssystem 8. Die Berührungspunkte des Straßenmautsystems 1 mit dem gesicherten Zahlungstransaktionssystem 8 sind auf ein Minimum beschränkt: Nur im Schritt 55 des Sendens des berechneten Mautwerts M$ und der Ersatzkennung AL# an den Transaktionsserver 9 kommt es zu einer Datenübertragung zwischen Mautserver 4 und Transaktionsserver 9; und nur zu Beginn und am Ende des Zahlungstransaktionsprozesses 33 findet durch Senden (Schritt 32) der Transaktionskennung TID und (optional) des Transaktionswerts T$ bzw. Senden (Schritt 41) der Transaktionskennung TID und der Ersatzkennung AL# ein Datenaustausch zwischen Mautterminals 5 und Transaktionsserver 9 statt.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Abrechnen von Ortsnutzungen von Fahrzeuggeräten (21, 24) in einem Straßenmautsystem (1) mittels eines davon gesonderten Zahlungstransaktionssystems (8), wobei das Straßenmautsystem (1) einen Mautserver (4), zumindest ein Mautterminal (5) und zumindest ein Subsystem (16, 17) zum Ermitteln der Ortsnutzungen hat und das Zahlungstransaktionssystem (8) einen Transaktionsserver (9) und zumindest ein Transaktionsterminal (10) für Zahlungskarten (12) hat, wobei jedes Transaktionsterminal (10) einem oder mehreren Mautterminals (5) zugeordnet ist, umfassend:
Eingeben einer Kennung (OID) eines Fahrzeuggeräts (21, 24) in das Mautterminal (5);
Generieren einer zur Fahrzeuggerätkennung (OID) zugehörigen eindeutigen Transaktionskennung (TID) im Mautterminal (5), wobei aus der bloßen Kenntnis der Transaktionskennung (TID) die Fahrzeuggerätkennung (OID) nicht ableitbar ist;
Senden der Transaktionskennung (TID) vom Mautterminal (5) an den Transaktionsserver (9) über eine zwischen diesen verlaufende erste Datenverbindung (13);
Senden der Transaktionskennung (TID) vom Transaktionsserver (9) an das Transaktionsterminal (10) über eine zwischen diesen verlaufende zweite Datenverbindung (11);
Eingeben einer Kartenkennung (CC#) einer Zahlungskarte (12) in das Transaktionsterminal (10) und Senden der Kartenkennung (CC#) und der Transaktionskennung (TID) vom Transaktionsterminal (10) an den Transaktionsserver (9) über die zweite Datenverbindung (11);
wobei ein Transaktionswert (T$) entweder zuerst vom Mautterminal (5) oder später vom Transaktionsterminal (10) zum Transaktionsserver (9) gesendet wird;
Senden einer im Transaktionsserver (9) generierten, der Kartenkennung (CC#) eindeutig zugeordneten Ersatzkennung (AL#) und der Transaktionskennung (TID) vom Transaktionsserver (9) über die erste Datenverbindung (13) an das Mautterminal (5);
Aufsuchen der der Transaktionskennung (TID) zugehörigen Fahrzeuggerätkennung (OID) im Mautterminal (5) und Senden der Fahrzeuggerätkennung (OID) und der Ersatzkennung (AL#) vom Mautterminal (5) an den Mautserver (4); und
Verwenden der Ersatzkennung (AL#) in einer Kommunikation über eine zwischen Mautserver (4) und Transaktionsserver (9) verlaufende dritte Datenverbindung (15) für das Abrechnen einer vom Subsystem (16, 17) unter der zugehörigen Fahrzeuggerätkennung (OID) ermittelten Ortsnutzung.

2. Verfahren nach Anspruch 1, **dadurch gekennzeichnet, dass** beim Abrechnen der Ortsnutzung
im Straßenmautsystem (1) zu der Fahrzeuggerätkennung (OID) zumindest ein Mautwert (M$) berechnet wird;
im Mautserver (4) auf eine Abrechnungsaufforderung (RC) hin die der Fahrzeuggerätkennung (OID) zugeordnete Ersatzkennung (AL#) ermittelt und zusammen mit dem Mautwert (M$) über die dritte Datenverbindung (15) an den Transaktionsserver (9) gesendet wird; und
im Transaktionsserver (9) die der empfangenen Ersatzkennung (AL#) zugeordnete Kartenkennung (CC#) ermittelt und der Mautwert (M$) anhand der ermittelten Kartenkennung (CC#) abgerechnet wird.

3. Verfahren nach Anspruch 1 oder 2, **dadurch gekennzeichnet, dass** in das Mautterminal (5) zusätzlich ein Transaktionswert (T$) eingegeben wird, welcher beim Senden der Transaktionskennung (TID) vom Mautterminal (5) an den Transaktionsserver (9) und von dort weiter an das Transaktionsterminal (10) mitgesendet wird.

4. Verfahren nach einem der Ansprüche 1 bis 3, **dadurch gekennzeichnet, dass** die Transaktionskennung (TID) beim Senden der Fahrzeuggerätkennung (OID) und der Ersatzkennung (AL#) vom Mautterminal (5) an den Mautserver (4) mitgesendet wird.

5. Verfahren nach einem der Ansprüche 1 bis 4, **dadurch gekennzeichnet, dass** im Transaktionsserver (9) Autorisierungsdaten (AuDat) generiert werden, welche beim Senden der Ersatzkennung (AL#) und der Transaktionskennung (TID) vom Transaktionsserver (9) an das Mautterminal (5) und bevorzugt auch beim Senden der Fahrzeuggerätkennung (OID) und der Ersatzkennung (AL#) vom Mautterminal (5) an den Mautserver (4) mitgesendet werden.

6. Verfahren nach einem der Ansprüche 1 bis 5, **dadurch gekennzeichnet, dass** im Mautterminal (5) zusätzlich personen- und/oder fahrzeugbezogene Daten erfasst werden, welche beim Senden der Fahrzeuggerätkennung (OID) und der Ersatzkennung (AL#) vom Mautterminal (5) an den Mautserver (4) mitgesendet werden.

7. Verfahren nach einem der Ansprüche 1 bis 6, **dadurch gekennzeichnet, dass** als Zahlungstransaktionssystem (8) ein Kreditkarten-Zahlungstransaktionssystem verwendet wird.

## Claims

1. A method for charging fees for location usages by onboard units (21, 24) in a road toll system (1) by means of a separate payment transaction system (8), wherein the road toll system (1) has a toll server (4), at least one toll terminal (5) and at least one sub-system (16, 17) for determining the location usages, and the payment transaction system (8) has a transaction server (9) and at least one transaction terminal (10) for payment cards (12), wherein every transaction terminal (10) is assigned to one or more toll terminals (5), said method comprising:
inputting an identification (OID) of an on-board unit (21, 24) into the toll terminal (5);
generating a unique transaction identification (TID) corresponding to the on-board unit identification (OID) in the toll terminal (5), wherein the on-board unit identification (OID) is not derivable from solely knowing the transaction identification (TID);
transmitting the transaction identification (TID) from the toll terminal (5) to the transaction server (9) via a first data connection (13) therebetween;
transmitting the transaction identification (TID) from the transaction server (9) to the transaction terminal (10) via a second data connection (11) therebetween;
inputting a card identification (CC#) of a payment card (12) into the transaction terminal (10) and transmitting the card identification (CC#) and the transaction identification (TID) from the transaction terminal (10) to the transaction server (9) via the second data connection (11);
wherein a transaction value (T$) is transmitted either beforehand from the toll terminal (5) or later from the transaction terminal (10) to the transaction server (9);
transmitting a substitute identification (AL#), generated in the transaction server (9) and unambiguously associated with the card identification (CC#), and the transaction identification (TID) from the transaction server (9) to the toll terminal (5) via the first data connection (13);
retrieving, in the toll terminal (5), the on-board unit identification (OID) associated with the transaction identification (TID) and transmitting the on-board unit identification (OID) and the substitute identification (AL#) from the toll terminal (5) to the toll server (4); and
using the substitute identification (AL#) in a communication via a third data connection (15) between the toll server (4) and the transaction server (9) for charging a fee for a location usage determined by the sub-system (16, 17) under the respective on-board unit identification (OID).

2. The method according to Claim 1, **characterised in that**, when charging a fee for the location usage,
at least one toll value (M$) is calculated in the toll road system (1) relative to the on-board unit identification (OID);
in the toll server (4), the substitute identification (AL#) associated with the on-board unit identification (OID) is determined in the event of a fee charge request (RC) and is transmitted, together with the toll value (M$), to the transaction server (9) via the third data connection (15); and
in the transaction server (9), the card identification (CC#) associated with the received substitute identification (AL#) is determined and the toll value (M$) is charged on the basis of the determined card identification (CC#).

3. The method according to Claim 1 or 2, **characterised in that** a transaction value (T$) is additionally input into the toll terminal (5) and is additionally transmitted when the transaction identification (TID) is transmitted from the toll terminal (5) to the transaction server (9), and from there further to the transaction terminal (10).

4. The method according to one of Claims 1 to 3, **characterised in that** the transaction identification (TID) is additionally transmitted when the on-board unit identification (OID) and the substitute identification (AL#) are transmitted from the toll terminal (5) to the toll server (4).

5. The method according to one of Claims 1 to 4, **characterised in that** authorisation data (AuDat) is generated in the transaction server (9) and is also transmitted when the substitute identification (AL#) and the transaction identification (TID) are transmitted from the transaction server (9) to the toll terminal (5) and preferably also when the on-board unit identification (OID) and the substitute identification (AL#) are transmitted from the toll terminal (5) to the toll server (4).

6. The method according to one of Claims 1 to 5, **characterised in that** person-based and/or vehicle-based data is additionally captured in the toll terminal (5) and is also transmitted when the on-board unit identification (OID) and the substitute identification (AL#) are transmitted from the toll terminal (5) to the toll server (4).

7. The method according to one of Claims 1 to 6, **characterised in that** a credit card payment transaction system is used as the payment transaction system (8).

## Revendications

1. Procédé de décompter des utilisations d'espaces par des dispositifs de véhicules (21, 24) dans un système de péage routier (1) au moyen d'un système de transaction de paiement (8) séparé de celui-ci, où le système de péage routier (1) a un serveur de péage (4), au moins un terminal de péage (5) et au moins un sous-système (16, 17) pour l'évaluation des utilisations d'espaces et le système de transaction de paiement (8) a un serveur de transaction (9) et au moins un terminal de transaction (10) pour des cartes de paiement (12), où chaque terminal de transaction (10) est associé à un ou plusieurs terminaux de péage (5), comprenant :
l'entrée d'un identifiant (OID) d'un dispositif de véhicule (21, 24) dans le terminal de péage (5) ;
la génération d'un identifiant de transaction (TID) unique correspondant à l'identifiant de véhicule (OID), où, à partir de la seule connaissance de l'identifiant de transaction (TID) l'identifiant de véhicule (OID), ne peut pas être dérivé ;
l'envoi de l'identifiant de transaction (TID) à partir du terminal de péage (5) vers le serveur de transaction (10) par l'intermédiaire d'une première liaison de données (13) s'étendant entre ceux-ci ;
l'envoi de l'identifiant de transaction (TID) à partir du serveur de transaction (9) vers le terminal de transaction (10) par l'intermédiaire d'une deuxième liaison de données (11) s'étendant entre ceux-ci ;
l'entrée d'un identifiant de carte (CC#) d'une carte de paiement (12) dans le terminal de transaction (10) et l'envoi de l'identifiant de carte (CC#) et de l'identifiant de transaction (TID) à partir du terminal de transaction (10) vers le serveur de transaction (9) par l'intermédiaire de la deuxième liaison de données (11) ;
où une valeur de transaction (T$) est envoyée, soit d'abord à partir du terminal de péage (5), soit plus tard à partir du terminal de transaction (10), vers le serveur de transaction (9) ;
l'envoi d'un identifiant de remplacement (AL#), associé de manière unique à l'identifiant de carte (CC#) et généré dans le serveur de transaction (9), et de l'identifiant de transaction (TID) à partir du serveur de transaction (9) vers le terminal de péage (5) par l'intermédiaire de la première liaison de données (13) ;
la recherche de l'identifiant de véhicule (OID) correspondant à l'identifiant de transaction (TID) dans le terminal de péage (5) et l'envoi de l'identifiant de véhicule (OID) et de l'identifiant de remplacement (AL#) à partir du terminal de péage (5) vers le serveur de péage (4) ; et
l'utilisation de l'identifiant de remplacement (AL#) dans une communication par l'intermédiaire d'une troisième liaison de données (15) s'étendant entre le serveur de péage (4) et le serveur de transaction (9) pour décompter une utilisation d'espace determinée par le sous-système (16, 17) sous l'identifiant de véhicule (OID) correspondant.

2. Procédé selon la revendication 1, **caractérisé en ce que**, quand l'utilisation d'espace est décompté,
au moins une valeur de péage (M$) est calculée dans le système de péage routier (1) correspondant à l'identifiant de véhicule (OID) ;
l'identifiant de remplacement (AL#) associé à l'identifiant de véhicule (OID) est déterminé dans le serveur de péage (4) suite à une demande de calcul (RC) et est envoyé ensemble avec la valeur de péage (M$) vers le serveur de transaction (9) par l'intermédiaire de la troisième liaison de données (15) ; et
dans le serveur de transaction (9), l'identifiant de carte (CC#) associé à l'identifiant de remplacement (AL#) est déterminé et la valeur de péage (M$) est décomptée à l'aide de l'identifiant de carte (CC#) déterminé.

3. Procédé selon la revendication 1 ou 2, **caractérisé en ce qu'**une valeur de transaction (TS) est indiquée de manière complémentaire dans le terminal de péage (5), laquelle est envoyée conjointement lors de l'envoi de l'identifiant de transaction (TID) à partir du terminal de péage (5) vers le serveur de transaction (9) et de là plus loin vers le terminal de transaction (10).

4. Procédé selon l'une des revendications 1 à 3, **caractérisé en ce que** l'identifiant de transaction (TID) est envoyé conjointement lors de l'envoi de l'identifiant de véhicule (OID) et de l'identifiant de remplacement (AL$) à partir du terminal vers le péage (5) au serveur de péage (4).

5. Procédé selon l'une des revendications 1 à 4, **caractérisé en ce que**, dans le serveur de transaction (9), des données d'autorisation (AuDat) sont générées, lesquelles sont envoyées conjointement lors de l'envoi de l'identifiant de remplacement (AL#) et de l'identifiant de transaction (TID) à partir du serveur de transaction (9) vers le terminal de péage (5) et de préférence également lors de l'envoi de l'identifiant de véhicule (OID) et de l'identifiant de remplacement (AL#) à partir du terminal de péage (5) vers le serveur de péage (4).

6. Procédé selon l'une des revendications 1 à 5 **caractérisé en ce que**, dans le terminal de péage (5), des données concernant les personnes et/ou le véhicule sont saisies de manière complémentaire, lesquelles sont envoyées conjointement lors de l'envoi de l'identifiant de véhicule (OID) et de l'identifiant de remplacement (AL#) à partir du terminal de péage (5) vers le serveur de péage (4).

7. Procédé selon l'une des revendications 1 à 6, **caractérisé en ce qu'**en tant que système de transaction de paiement (8) un système de transaction de paiement par cartes de crédit est utilisé.
